# Europäisches Patentamt
## European Patent Office
## Office européen des brevets

(19)

(11) Veröffentlichungsnummer: **0 144 805**
**B1**

(12) # EUROPÄISCHE PATENTSCHRIFT

(45) Veröffentlichungstag der Patentschrift:
**25.02.87**

(51) Int. Cl.⁴: **C 08 K 5/14,** C 08 L 15/00

(21) Anmeldenummer: **84113613.8**

(22) Anmeldetag: **12.11.84**

(54) Verfahren zur Herstellung eines vernetzten Nitrilkautschuks.

(30) Priorität: **23.11.83 DE 3342309**

(43) Veröffentlichungstag der Anmeldung:
**19.06.85 Patentblatt 85/25**

(45) Bekanntmachung des Hinweises auf die Patenterteilung:
**25.02.87 Patentblatt 87/9**

(84) Benannte Vertragsstaaten:
**DE FR GB IT**

(56) Entgegenhaltungen:
**AU-B-472 354**
**DE-A-3 311 217**
**DE-C-3 226 061**
**NL-A-272 390**

**"Rubber technology and manufacture", 2.
Ausgabe, 1982, Seiten 186-187, Butterworth
Scientific, London, GB;**

(73) Patentinhaber: **BAYER AG, Konzernverwaltung RP
Patentabteilung, D-5090 Leverkusen 1 Bayerwerk
(DE)**

(72) Erfinder: **Thörmer, Joachim, Dr., Emil- Nolde-
Strasse 39, D-5090 Leverkusen 1 (DE)**
Erfinder: **Szentivanyi, Zsolt, Dr., Carl- Rumpff-
Strasse 9, D-5090 Leverkusen 1 (DE)**
Erfinder: **Buding, Hartmuth, Dr.,
Liebermannstrasse 1, D-4047 Dormagen 1 (DE)**

EP 0 144 805 B1

**Beschreibung**

Die Erfindung betrifft ein Verfahren zur Herstellung eines vernetzten Nitrilkautschuks, dessen Doppelbindungen zu 85 bis 96 % hydriert sind.

Es ist aus der DE-OS 29 13 992 bekannt, partiell hydrierte Nitrilkautschuke mit Hilfe eines Schwefelvulkanisiersystems zu vulkanisieren. Die Vernetzung mit bestimmten Peroxiden (Beispiel 4, Nr. 16) liefert nur unbefriedigende Ergebnisse.

Es wurde nun gefunden, daß bei geeigneter Wahl des per-Oxids nicht nur diese schlechten Ergebnisse vermieden werden können, sondern sogar bessere Ergebnisse, insbesondere bei der Ozonbeständigkeit, erzielt werden, als mit der Schwefelvulkanisation.

Gegenstand der Erfindung ist daher ein Verfahren zur Herstellung vernetzter Nitrilkautschuke, deren Doppelbindungen zu 85 bis 96 %, vorzugsweise zu 90 bis 95 % hydriert sind, mittels 1 bis 10 Gew.-%, vorzugsweise 4 bis 7 Gew.-% an Peroxiden, bezogen auf Polymeranteil der Kautschukmischung, dadurch gekennzeichnet, daß man Peroxide einsetzt, deren Halbwertszeit bei 170°C in Benzol mehr als 2 Minuten und bei gleicher Temperatur in LDPE (low density polyethylen) mehr als 8 Minuten beträgt.

Geeignete Nitrilkautschuke bestehen aus 10 bis 50 Gew.-% Acrylnitrileinheiten und 90 bis 50 Gew.-% konjugierten Dieneinheiten, beispielsweise Butadien-, Isopren- oder 1,3-pentadieneinheiten. Die partielle Hydrierung dieser Nitrilkautschuke ist bekannt.

Geeignete Peroxide sind, Bis-(tert.-butylperoxiisopropyl)-benzol, 2,5-Dimethyl-2,5-di(tert.-butylperoxi)-hexan und 2,5-Dimethyl-2,5-di(tert.-butylperoxi)-hexin-(3).

Der Begriff "Halbwertszeit" bedeutet, daß bei der angegebenen Temperatur nach einer Halbwertszeit 50 % der zu Beginn dieser Halbwertszeit vorhandenen Menge an Peroxid zerfallen ist.

Die Kautschukmischung kann weitere übliche Bestandteile wie sie für die Peroxidvernetzung von Polymeren verwendet werden, enthalten, z.B. Füllstoffe, Weichmacher, Alterungsschutzmittel, Verarbeitungshilfsmittel, Pigmente, Koagentien wie Triallylisocyanurat und Säureakzeptoren. Die erfindungsgemäß herstellbaren Produkte können in vielen Einsatzgebieten Verwendung finden, z.B. als Dichtungen aller Art, als Schläuche, vor allem Hydraulikschläuche, als Zahnriemen, Kabelmäntel, Profile, Auskleidungen, Walzen, Membranen und Gummi-Metallteilen.

**Beispiel**

Kautschukmassen der in der nachfolgenden Tabelle angegebenen Zusammensetzung, wurden bei 180°C in 18 Minuten vulkanisiert.

Es wurde ein Nitrilkautschuk aus 39 Gew.-% Acrylnitril und 61 Gew.-% Butadien mit einem Hydriergrad von 90 % verwendet.

Es wurde an den Vulkanisaten die Ozonbeständigkeit bei unterschiedlichen Dehnungen nach DIN 53 509 bestimmt (23°C, 60 % rel. Luftfeuchtigkeit, 250 pphm Ozon in Luft).

Es zeigt sich, daß die Peroxidvernetzung bessere Produkte hinsichtlich der Ozonbeständigkeit liefert als die Schwefelvernetzung.

## Tabelle

|  | Gewichtsteile | |
|---|---|---|
| Kautschuk | 100 | 100 |
| Stearinsäure | – | 1 |
| Wachs (Lunacera C44) | 2 | – |
| ZnO aktiv | 3 | 5 |
| MgO | 7 | 7 |
| styrolisiertes Diphenylamin | 1,1 | 2 |
| Zinksalz des 2-Mercaptobenzimidazols | 0,4 | 3 |
| Ruß (Corax N 550) | 50 | 50 |
| Verarbeitungshilfsmittel | – | 2 |
| Schwefel | – | 0,125 |
| Tetramethylthiuramdisulfid | – | 2 |
| Schwefelspender | – | 1 |
| Triallylisocyanurat | 1,75 | – |
| Bis-(tert.-butylperoxiisopropyl-benzol) | 7,5 | – |

Ergebnisse der Ozonalterung bis zur
ersten Rißbildung in Stunden

Dehnung

| | | |
|---|---|---|
| 10 % | >168 | 168 |
| 20 % | >168 | 6 |
| 30 % | >168 | 4 |
| 60 % | 24 | 4 |

## Patentansprüche

Verfahren zur Herstellung vernetzter Nitrilkautschuke, deren Doppelbindungen zu 85 bis 96 % hydriert sind, mittels 1 bis 10 Gew.-% an Peroxiden, bezogen auf Polymeranteil der Kautschukmischung, dadurch gekennzeichnet, daß man Peroxide einsetzt, deren Halbwertszeit bei 170°C in Benzol mehr als 2 Minuten und in LDPE mehr als 8 Minuten beträgt.

## Claim

Process for the production of cross-linked nitrile rubbers, 83 to 96% of the double bonds of which are hydrogenated, using 1 to 10% by weight of peroxides, based on the polymer content of the rubber mixture, characterised in that peroxides are used which have a half-life at 170°C of more than 2 minutes in benzene and more than 8 minutes in LDPE.

## Revendication

Procédé de production de caoutchoucs nitriliques réticulés dont les doubles liaisons sont hydrogénées dans la proportion de 85 à 96 %, au moyen de 1 à 10 % en poids de peroxydes, par rapport à la fraction de polymère du mélange de caoutchouc, caractérisé en ce qu'on utilise des peroxydes dont la demivie à 170°C dépasse 2 minutes dans le benzène et dépasse 8 minutes dans le LDPE.